# EUROPEAN PATENT APPLICATION

(11) **EP 1 429 243 A2**
(43) Date of publication of application: **16.06.2004**
(21) Application number: 03257829.6
(22) Date of filing: 12.12.2003
(51) Int. Cl.: G06F 9/445

(54) **Device driver installation**

(30) Priority: 14.12.2002 KR 2002080055; 13.05.2003 KR 2003030362
(71) Applicant: Samsung Electronics Co., Ltd., Suwon-si, Gyeonggi-do 442-742 (KR)
(72) Inventor: Kim, Yang-moon, Yeongtong-gu Suwon-si Gyeonggi-do (KR); Choi, In-sung, Gwanak-gu Seoul (KR)
(74) Representative: Geary, Stuart Lloyd

(57) **Abstract**

A method and apparatus for installing device drivers for driving peripherals, including obtaining peripheral identification information from a peripheral, synthesizing a basic address of a site providing a device driver and peripheral identification information of the peripheral, and when the combined address and installing the retrieved device in the host and/or the peripheral.

## Description

The present invention relates to method of installing a device driver, the method comprising sending an http or ftp request to a remote server, the request being in respect of a URL identifying a device driver resource.

Computer peripheral devices, e.g. scanners, printers, graphics accelerator cards and sound cards, are generally controlled by a firmware or software device driver. Many manufacturers provide device drivers with the devices or via another route, e.g. from web sites on the Internet.

The installation of device drivers can be difficult for non-technical users.
Additionally, users can lose the data carriers containing the device drivers, making it impossible to reinstall the device driver.

Conventional methods of installing device drivers will now be described.

In the case where a device is a peripheral, such as a scanner or a printer connected to a host, the driver for driving the peripheral can be provided through a web site or provided on, by way of example, a storage medium, such as a digital versatile disk (DVD), a compact disk (CDROM) or a diskette.

If the device driver is provided through a web site, a user accesses the web site of a peripheral manufacturer, manually finds a desired item on the web site, and downloads a corresponding driver into the host. Here, it may not be easy for the user to find the desired item on the web site because the user may need to know the precise address of the web site of the manufacturer, the precise model of the peripheral for which a driver is needed, the operating system (OS) running on the host, the default language of the OS, the structure of the web site, and the location of the device driver downloaded.

On the other hand, if the device driver is provided via a storage medium, the user has to use a reading apparatus that reads the driver from the storage medium in the user's host computer. In other words, when the storage medium is a DVD ROM or a CDROM, a DVD ROM device or a CDROM device is required in the host computer as the reading device. Accordingly, in order to install the device driver in the host, a reading device must be installed in the host computer, the user should be able to use the reading device conveniently, and the user should keep the storage medium in their possession for as long as it may be needed.

In addition, if the device driver is stored in the host and the host provides a driver reinstallation function, the user can reinstall a driver in the host using the driver reinstallation function. However, if the host does not provide a driver reinstallation function or the driver stored in the host is damaged, the user cannot install the driver in the host. Furthermore, since the driver that has already been stored in the host is reinstalled, a new or newer version of the driver cannot be installed in the host.

A method according to the present invention is characterised by building the URL directly on the basis of the device for which the driver is required and, optionally, other characteristics of the apparatus requiring the driver.

Additional preferred and optional features are set forth in claims 1 to 30 appended hereto.

Embodiments of the present invention will now be described, by way of example, with reference to the accompanying drawings, in which:
FIG. 1 is a flowchart illustrating a first method of installing a device driver according to the present invention;
FIG. 2 is a block diagram of a first driver installation apparatus according to the present invention;
FIG. 3 is a flowchart illustrating a second method of installing a device driver according to the present invention;
FIG. 4 is a flowchart illustrating operation 100 of FIG. 3;
FIG. 5 is a flowchart illustrating operation 102 of FIG. 3; and
FIG. 6 is a block diagram of a second driver installation apparatus according to the present invention.

Reference will now be made in detail to the embodiments of the present invention, examples of which are illustrated in the accompanying drawings, wherein like reference numerals refer to the like elements throughout. The embodiments are described below to explain the present invention by referring to the figures.

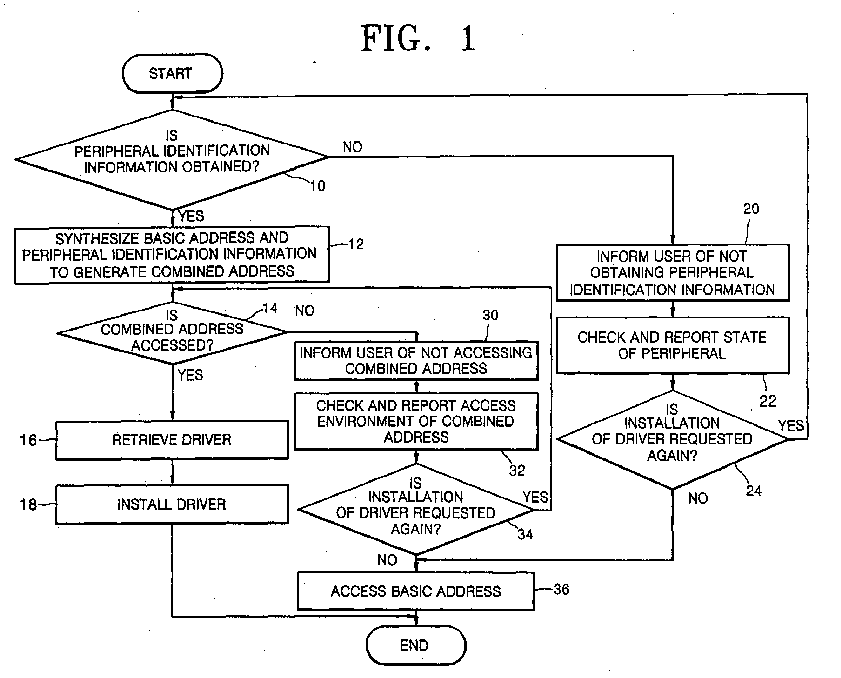

FIG. 1 is a flowchart illustrating a method for installing a device driver, according to an embodiment of the present invention, with the method including retrieving a driver from a combined address that is created using peripheral identification information obtained from a peripheral and installing the driver in operations 10 through 18, preparing for again obtaining the peripheral identification information in operations 20 through 24, preparing for again accessing the combined address in operations 30 through 34, and manually installing the driver in operation 36.

The method for installing a device driver illustrated in FIG. 1, according to an embodiment of the present invention, is used to install a device driver which drives peripherals in a host such as a personal computer, for example, with peripherals denote devices that are connected to the host.

First, a host determines whether peripheral identification information ID, which is used for identifying a peripheral, has been obtained from a peripheral, in operation 10.

When it is determined that the peripheral identification information has been obtained from the peripheral, the basic address of a web site that provides a device driver and the peripheral identification information obtained from the peripheral are combined, in operation 12. In the case where the device driver is provided over a network, e.g., an intranet, the basic address and the combined address are the addresses of web sites connected to the network.

According to the present invention, when it is determined that the peripheral identification information has been obtained from the peripheral, information of the basic address, the peripheral identification information, at least one of an operating system (OS) type of the host, a default language of the OS, and an extension of the OS are combined, with the result being combined address thereof. For example, when the basic address is 'http://www.company.co.kr' and the peripheral identification information is 'MJC1000', the combined address created in an embodiment of the present invention becomes 'http://www.company.co.kr/mjc1000'.

Similarly, when the OS is 'Windows XP', a default language of the OS, i.e., the international code of the OS is English and the extension is 'exe', the combined address created in other embodiments of the present invention can be one of 'http://www.company.co.kr/mjc1000.exe', 'http://www.company.co.kr/mjc1000_xp.exe', or 'http://www.company.co.kr/mjc1000_xp_eng.exe', for example.

After operation 12, it is determined whether the host accesses the created combined address, in operation 14. When it is determined that the host has accessed the combined address, the host retrieves the device driver, provided from the accessed combined address, in operation16. After operation 16, the host installs the device driver retrieved from the combined address, in operation 18.

According to an embodiment of the present invention, the method for installing a device driver of FIG. 1 also selectively includes operations 20 through 24 and operation 36.

When it is determined that the peripheral identification information has not been obtained, or cannot be obtained, from the peripheral, the host sends a first message to the user in operation 20. Here, the first message reports that the peripheral identification information has not been obtained. Thus, the user may know from the first message that the host has not obtained the peripheral identification information from the peripheral.

After operation 20, the state of the peripheral is checked, with the result being reported to the user, in operation 22. For example, after operation 20, the host checks at least one of the state of cables connecting the peripheral and the host and the state of power supplied to the peripheral, and reports the result to the user. Thus, the user may then recognize and remove the cause of failure, to allow the host to obtain the peripheral identification information from the peripheral

Here, operations 20 and 22 may be performed at the same time, or operation 20 may be performed after operation 22.

After operation 22, the host determines whether the user has again requested automatic installation of the device driver, in operation 24. When it is determined that the user has again requested automatic installation of the device driver, operation 10 is performed. Otherwise, the host accesses the basic address, and the method for installing a device driver according to the present invention, shown in FIG. 1, is ended in operation 36, at which point, the user should manually find the device driver on the web site using the accessed basic address.

Meanwhile, the method for installing a device driver may selectively include at least one of operations 20 through 24 and operation 36, differently than illustrated in FIG. 1.

For example, according to another embodiment of the present invention, the method for installing a device driver may not include operation 36. In this case, when it is determined that the user cannot request automatic installation of the device driver, the method for installing a device driver is ended, instead of performing operation 36.

According to another embodiment of the present invention, the method for installing a device driver may not include operations 24 and 36. In this case, operation 10 is performed or the method for installing a device driver is ended after operation 22, instead of performing operations 24 or 36.

According to yet another embodiment of the present invention, the method for installing a device driver may not include operations 22, 24, and 36. In this case, operation 10 is performed or the method for installing a device driver is ended after operation 20.

According to another embodiment of the present invention, where operation 20 is omitted, when it is determined that the peripheral identification information has not been obtained from the peripheral, the host checks the state of the peripheral and reports the result in operation 22.

Alternatively, the method for installing a device driver may not include operation 22. In this case, operation 24 is performed after operation 20. The method for installing a device driver may not include operations 20 through 24 or operation 36. In this case, when it is determined that the peripheral identification information has not been obtained from the peripheral, it is checked again whether the peripheral identification information has been or can be obtained from the peripheral.

As further illustrated in FIG. 1, the method for installing a device driver may selectively include operations 30 through 36.

the method for installing a device driver may include operations 30 through 36, as illustrated in FIG. 1.]

When it is determined that the host has not accessed the combined address, the host sends the user a second message about having not accessed the combined address, in operation 30. After operation 30, the host checks an access environment to the combined address and reports the result to the user, in operation 32. Here, the access environment to the combined address refers to the connection state of cables connecting the host and the network.

After operation 32, the host determines whether the user again requests installation of the device drivers, in operation 34. When it is determined that the again user requests installation of the device driver, operation 14 is performed. Otherwise, the host accesses the basic address, in operation 36. Thus, the user will then have to manually find the device driver or the basic address web site.

Meanwhile, the method for installing a device driver may selectively includes operations 30 through 36, differently than illustrated in FIG. 1.

The method for installing a device driver may not include operations 32 through 36. In this case, operation 14 is performed or the method for installing a device driver is ended after operation 30.

The method for installing a device driver may not include operation 30. In this case, operation 32 is performed when it is determined that the host has not accessed the combined address. The method for installing a device driver may not include operation 36. In this case, when it is determined that the user has not requested automatic installation of the device driver, the method for installing a device driver may be ended. Alternatively, the method for installing a device driver may not include operations 30 through 36. In this case, when it is determined that the host has not accessed the combined address, the method for installing a device driver is ended.

Further, the method for installing a device driver may not include operations 30 through 34. In this case, when it is determined that the host has not accessed the combined address, the host accesses the basic address for the user to manually find the driver, in operation 36.

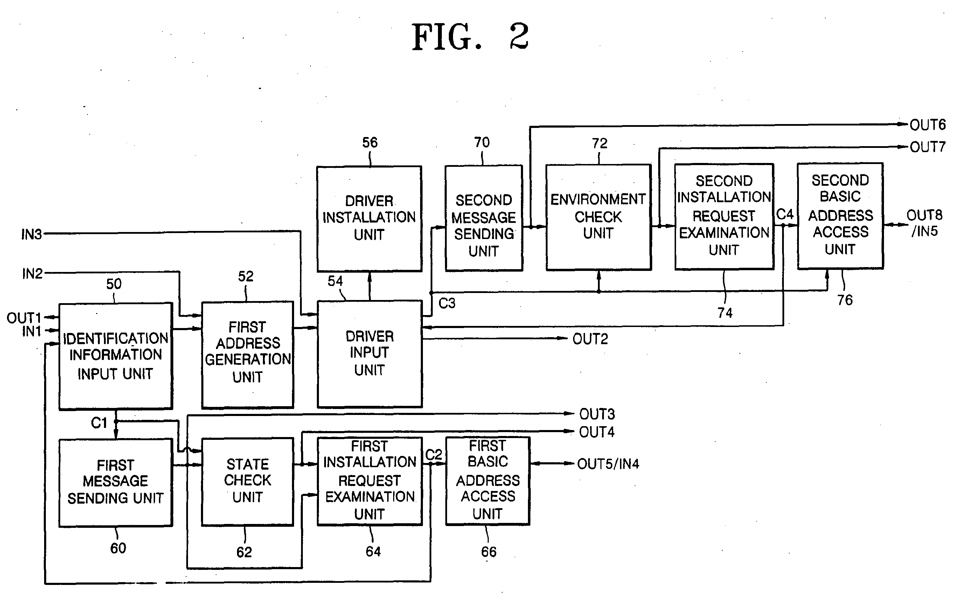

Hereinafter, a structure and operation of an apparatus, according to an embodiment of the present invention, for installing a device driver which carries a method for installing a device driver, according to another embodiment of the present invention, will be described with reference to FIG. 2.

FIG. 2 is a block diagram illustrating an apparatus for installing a device driver, according to an embodiment of the present invention, with the apparatus including an identification information output unit 50, a first address generation unit 52, a driver output unit 54, a driver installation unit 56, a first message sending unit 60, a state check unit 62, a first installation request examination unit 64, a first basic address access unit 66, a second message sending unit 70, an environment check unit 72, a second installation request examination unit 74, and a second basic address access unit 76.

The apparatus for installing a device driver of FIG. 2, performing a method for installing a device driver of FIG. 1, can be embedded in a host.

The identification information output unit 50, which performs operation 10 of FIG. 1, outputs a signal requesting peripheral identification information, which identifies a peripheral, to the peripheral via an output terminal OUT1, and receives the peripheral identification information supplied from the peripheral via an output terminal IN1, and to outputs the peripheral identification information to the first address generation unit 52.

In order to perform operation 12 of FIG. 1, the first address generation unit 52 combines the peripheral identification information supplied from the identification information output unit 50, and the basic address and outputs the result as a combined address to the driver output unit 54. In other words, when the peripheral identification information is output from the identification information output unit 50 to the first address generation unit 52, it is determined that the peripheral identification information has been obtained from the peripheral, so operation 12 is thereby performed. Here, the first address generation unit 52 may receive information of the basic address via an output terminal IN2 or previously store the basic address. In addition, the first address generation unit 52 may receive at least one of the OS type of the host, the default language of the OS, and the extension of the OS via the output terminal IN2 or previously store the information, for example.

In order to perform operations 14 and 16, the driver output unit 54 outputs the combined address, which is output from the first address generation unit 52, via an output terminal OUT2 to access the combined address that is connected to the network. Thereafter, the driver output unit 54 receives the driver, provided from the accessed combined address, via an output terminal IN3 and outputs the output driver to the driver installation unit 56.

In order to perform operation 18, the driver installation unit 56 installs the driver that is output from the driver output unit 54.

In order to perform operation 20, the first message sending unit 60 may send the user the first message, representing that the peripheral identification information has not been obtained, via an output terminal OUT3, in response to a first control signal C1 that is output from the identification information output unit 50. In addition, the first message sending unit 60 outputs the first message to the state check unit 62. The identification information output unit 50 then examines whether the peripheral identification information is output from the peripheral and outputs the examination result as the first control signal C1 to the first message sending unit 60. For example, when it is recognized that the peripheral identification information has not been obtained from the peripheral, based on the first control signal C1, the first message sending unit 60 sends the user the first message.

In order to perform operation 22, the state check unit 62 checks the state of the peripheral in response to completion of the sending of the first message. The state check unit 62 informs the user of the check result via an output terminal OUT4 and outputs the check result to the first installation request examination unit 64. In other words, when the first message sending unit 60 indicates that the first message is completely sent to the user, the state check unit 62 performs operation 22.

In order to perform operation 24, the first installation request examination unit 64 examines whether the user again requests automatic installation of the device driver, in response to the completion of the indicator of the check result from the state check unit 62, and outputs the examination result as a second control signal C2 to the identification information output unit 50 and the first basic address access unit 66. In order words, the first installation request examination unit 64 performs operation 24 after the user is informed of the check result by the state check unit 62. To this end, the first installation request examination unit 64 can be implemented by a key manipulation unit (not shown). In this case, the key manipulation unit, which is manipulated by the user who again requests automatic installation of the device driver, generates the second control signal C2. Here, the identification information output unit 50 again requests from the peripheral the peripheral identification information, via the output terminal OUT1, in response to the second control signal C2 output from the first installation request examination unit 64, and receives the peripheral identification information via the output terminal IN1. In other words, when it is determined that the user requests automatic installation of the device driver based on the second control signal C2, the identification information output unit 50 performs operation 10.

In order to perform operation 36, the first basic address access unit 66 accesses the basic address, in response to the second control signal C2 output from the first installation request examination unit 64. In other words, when it is identified, by the second control signal C2, that the user has not again requested automatic installation of the device driver, the first basic address access unit 66 performs operation 36. To this end, the first basic address access unit 66 outputs the basic address via an output terminal OUT5, to access the web site corresponding to the basic address, and receives from the web site a signal reporting the access to the basic address, via an output terminal IN4.

On the other hand, in order to perform operation 30, the second message sending unit 70 sends the user a second message, representing that the combined address has not been assessed, via an output terminal OUT6 in response to a third control signal C3 output from the driver output unit 54, and outputs the second message to the environment check unit 72. Here, in order to perform operation 14, the state of access to the combined address, which is output from the first address generation unit 52, is examined in the driver output unit 54, and the driver output unit 54 outputs the examination result as the third signal C3 to the second message sending unit 70. In other words, when the second message sending unit 70 recognizes that the combined address has not been accessed, based on the third control signal C3, the second message sending unit 70 sends the user the second message via an output terminal OUT6.

In order to perform operation 32, the environment check unit 72 checks the access environment of the combined address, in response to the completion of the sending of the second message, as illustrated in FIG. 2, and informs the user the check result via an output terminal OUT7. In other words, when the environment check unit 72 is informed that the second message sending unit 70 has completely sent the second message to the user, the environment check unit 72 performs operation 32.

In order to perform operation 34, the second installation request examination unit 74 examines whether the user again requests automatic installation of the device driver, in response to the sending of the check result by the environment check unit 72, and outputs the examination result as a fourth control signal C4 to the driver output unit 54 and the second basic address access unit 76. In other words, the second installation request examination unit 74 performs operation 34 after the user is informed of the check result of the environment check unit 72. To this end, the second installation request examination unit 74 can be implemented by a key manipulation unit (not shown). In this case, the key manipulation unit is manipulated by the user, who again requests automatic installation of the device driver, and generates the fourth control signal C4. The driver output unit 54 tries to access the combined address output from the first address generation unit 52, in response to the fourth control signal C4 output from the second installation request examination unit 74. In other words, when it is determined that the user has again requested automatic installation of the device driver, based on the fourth control signal C4, the driver output unit 54 performs operation 14.

The second basic address access unit 76 accesses the basic address in response to the fourth control signal C4 output from the second installation request examination unit 74. In other words, when it is determined that the user has not again requested automatic installation of the driver, based on the fourth control signal C4, the second basic address access unit 76 performs operation 36. To this end, the second basic address access unit 76 outputs the basic address via an output terminal OUT8 to access the web site, corresponding to the basic address, and receives a signal reporting the access to the basic address from the corresponding web site via an output terminal IN5.

The apparatus for installing a device driver may selectively include certain elements shown in FIG. 2, depending on differing embodiments of the present invention.

For example, in order to install a device driver, according to embodiments of the present invention, the apparatus for installing a device driver can be realized as shown in FIG. 2.

The apparatus for installing a device driver may not include the first basic address access unit 66. In addition, the apparatus for installing a device driver may not include the first installation request examination unit 64 and the first basic address access unit 66. Similary, the apparatus for installing a device driver may not include the state check unit 60, the first installation request examination unit 64, and the first basic address access unit 66.

Further the apparatus for installing a device driver may not include the first message sending unit 60. In this case, the state check unit 62 will check the state of the peripheral in response to the first control signal C1 output from the identification information output unit 50, inform the user of the check result via the output terminal OUT4, and output the check result to the first installation request examination unit 64. In other words, when it is determined that the peripheral identification information is not output from the peripheral based on the first control signal C1, the state check unit 62 can perform operation 22.

The apparatus for installing a device driver may not include the state check unit 62. In this case, the first installation request examination unit 64 can perform operation 24, in response to a completion of the sending of the first message by the first message sending unit 60, instead of completion of the informing of the check result by the state check unit 62.

Alternatively, the apparatus for installing a device driver may not include the first message sending unit 60, the state check unit 62, the first installation request examination unit 64, and the first basic address access unit 66.

Further the apparatus for installing a device driver may not include the environment check unit 72, the second installation request examination unit 74, and the second basic address access unit 76.

The apparatus for installing a device driver may also not include the second message sending unit 70. In this case, the environment check unit 72 can check the access environment to the combined address in response to the third control signal C3 output from the driver output unit 54 and output the check result to the user via the output terminal OUT7. In other words, when it is determined that the combined address has not been accessed, based on the third control signal C3 switch being output from the driver output unit 54, the environment check unit 72 can perform operation 32.

Alternatively, the apparatus for installing a device driver may not include the second basic address access unit 76. The apparatus for installing a device driver may not include the second message sending unit 70, the environment check unit 72, the second installation request examination unit 74, and the second basic address access unit 76.

Lastly, but not limited hereto, the apparatus for installing a device driver may not include the second message sending unit 70, the environment check unit 72, and the second installation request examination unit 74. In this case, the second basic address access unit 76 can accesse the basic address in response to the third control signal C3, which is output from the driver output unit 54. In other words, when it is determined that the combined address is not been accessed based on the third control signal C3, the second basic address access unit 76 can perform operation 36.

Hereinafter, a method for installing a device driver according to still another embodiment of the present invention will be described with reference to the accompanying drawings.

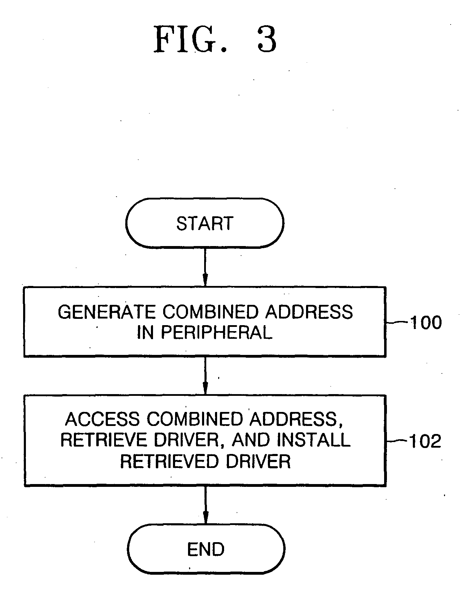

FIG. 3 is a flowchart for explaining a method for installing a device driver, according to another embodiment of the present invention. As illustrated in FIG. 3, the method may include the generating of a combined address in a peripheral, in operation 100, and accessing the combined address by the host, retrieving a driver from the combined address, and installing the driver, in operation 102.

In another method for installing a device driver, a peripheral generates a combined address using combined information stored in.the peripheral and provides the combined address to a host, in operation 100. Here, the combined information stored in the peripheral corresponds to at least one of a basic address, which is the address of a site providing a driver, i.e., a web site of a peripheral manufacturer, including information on model information on the model and/or item of the peripheral driven by the driver, a default language of an operating system (OS), and installation type information on the installation type of the driver. Here, as only examples, the basic address may be 'http://www.company.co.kr', as in the above-described example, and the model information may be 'MJC1000' or 'LMFP/123' (where, LMFP/123 identifies the item name of a laser multi-function peripheral (MFP) and the model name of 123), and the default language may be Korean, English, or German, and the installation type information may be one of complete installation, partial installation, or user installation.

In this case, when the basic address is the same as in the above-described example, the model information may be 'LMFP/123', a default language of the OS may be German, the installation type information may be identified as a complete installation, and the combined address created may become 'http://www.company.co.kr/Imfp/123/german/1'. Here, '1' placed after 'german' denotes the installation type information being a complete installation.

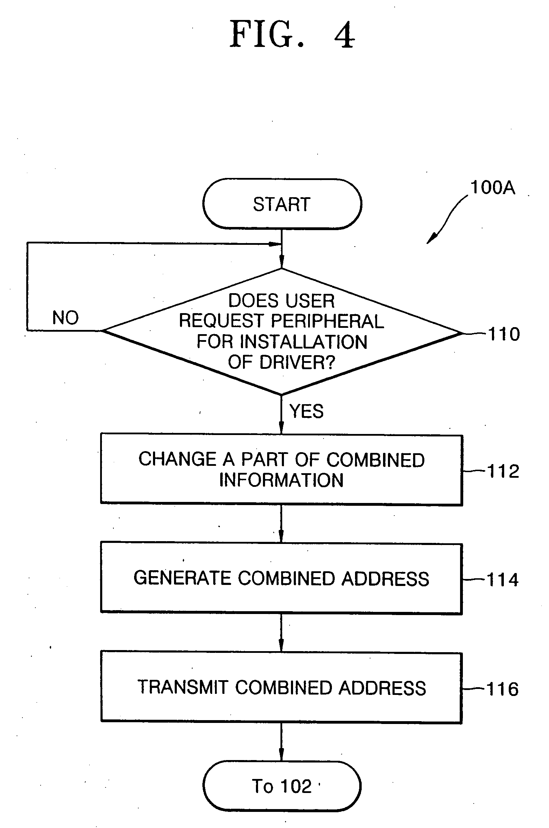

FIG. 4 is a flowchart explaining operation 100 shown in FIG. 3, according to an embodiment 100A of the present invention, with operation 100A including the generating of a combined address and transmitting the combined address when a user requests installation of a device driver for the peripheral, in operations 110 through 116.

According to embodiments of the present invention, it is determined whether the user requests the peripheral for installation of the driver in the host, in operation 110. When it is determined that the user does not request the peripheral driver installation in the host, operation 110 is performed. Otherwise, a portion of the combined information stored in the peripheral is changed, in operation 112. Here, a portion of the combined information that can be changed by the user may be at least one of the above-described default language of an OS and information on the installation type of the driver. For example, the user can choose the default language to be Korean, English, or German, and choose the installation type information to be one of a complete installation, partial installation, or user installation. Here, when the installation type information is chosen to be a complete installation, the entire contents of the driver are installed, when the installation type information is chosen to be a user installation, the contents of a driver to be installed is decided by the user, and when the installation type information is determined as partial installation, only partial contents, that have been previously designated by a manufacturer of the driver, are installed. In this case, the basic address and the model information in the combined information may be fixed by the peripheral manufacturer. After operation 112, a combined address is generated using the changed combined information, and the other part of the stored combined information in operation 114.

According to another embodiment of the present invention, the user can request installation of the device driver via the host (not peripheral). In other words, the user can request the host instead of the peripheral, for installation of the driver.

According to still another embodiment of the present invention, the method for installing a device driver may not include operation 112. When it is determined that the user requests the peripheral for installation of the driver, the combined address is generated using the combined information stored in the peripheral, in operation 114.

After operation 114, the combined address is transmitted to the host, in operation 116, and then, operation 102 is performed.

As described above, the peripheral can generate the combined address using the combined information stored in the peripheral, and the host can access the combined address provided from the peripheral, retrieve the driver, and install the retrieved driver. Thus, the peripheral manufacturer can set the preferred combined information, when manufacturing the peripheral, such that the combined address is generated regardless of the type of a host.

After operation 110, the combined address provided from the peripheral can be accessed, and the driver provided at the combined address retrieved by the host and installed in operation 102.

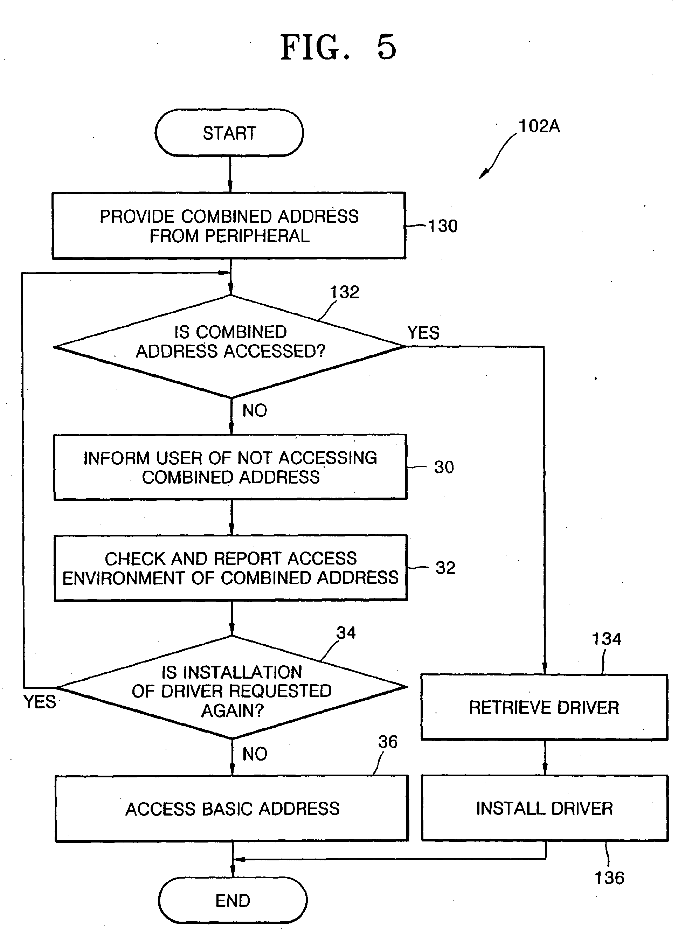

FIG. 5 is a flowchart explaining operation 102 shown in FIG. 3, according to an embodiment 102A of the present invention, with operation 102A including an accessing of the combined address, retrieving the driver, and installing the retrieved driver in operations 130 through 136, and accessing the basic address depending on whether the combined address is attempted to be accessed again, in operations 30 through 36.

According to the present invention, after operation 100, the combined address is generated and provided to the host from the peripheral, in operation 130. After operation 130, it is determined whether the combined address provided from the peripheral has been accessed, in operation 132. For example, after operation 130, it is determined whether a connection program that connects a host to the Internet or an intranet, i.e., basic browser program such as Internet Explorer, is driven and the host has accessed the combined address. Here, the combined address is inserted in the basic browser program such that the host can access the combined address.

When it is determined that the host has accessed the combined address, the host retrieves the device driver provided at the accessed combined address, in operation 134. After operation 134, the host installs the driver retrieved from the combined address, in operation 136. In this case, the driver is installed in the host according to the combined information, as changed by the user in operation 112 illustrated in FIG. 4, that is, according to the default language and/or installation type information designated by the user.

Finally, operations 132, 134, and 136, of FIG. 5, can perform the same operations as 14, 16, and 18 of FIG. 1.

In this case, the method for installing a device driver can further include operations 30 through 36 as illustrated in FIG. 5. Here, operations 30 through 36 of FIG. 5 perform operations operations 30 through 36 of FIG. 1, and thus, the same reference numerals are used. Thus, detailed descriptions of operations 30 through 36, of FIG. 5, will be omitted.

However, after operation 32, unlike the above described embodiment, the user can request the peripheral, instead of the host, for installation of the driver.

Hereinafter, the structure and the operation of an apparatus for installing a device driver, which carries out another embodiment of the aforementioned method for installing a device driver shown in FIG. 3, will be described with reference to the accompanying description.

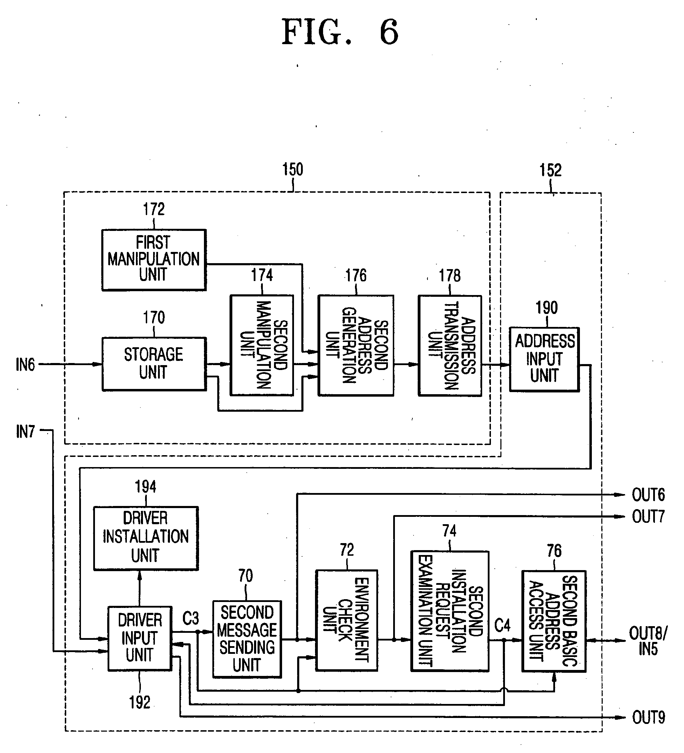

FIG. 6 is a block diagram illustrating an apparatus for installing a device driver, according to another embodiment of the present invention, with the apparatus including a peripheral 150 and a host 152.

The peripheral 150 and the host 152 can perform operations 100 and 102 of FIG. 3, respectively. In other words, in order to perform operation 100, the peripheral 150 can generate a combined address using stored combined information and provide the combined address to the host 152. To this end, the peripheral 150, as illustrated in FIG. 6, includes a storage unit 170, first and second manipulation units 172 and 174, an address generation unit 176, and an address transmission unit 178. For example, the peripheral 150 of FIG. 6 can perform operation 100A, of FIG. 4.

In order to perform operation 110, of operation 100A of FIG. 4, the first manipulation unit 172 can be manipulated by a user, who requests installation of the driver, to generate an installation request signal, and output the generated installation request signal to the second address generation unit 176. To this end, the first manipulation unit 172 can be representative of an installation button (not shown) for generating an installation request signal, when being pushed.

In order to perform operation 112, the second manipulation unit 174 changes a part of the combined information read out from the storage unit 170, manipulated by the user, and outputs the changed combined information to the second address generation unit 176. To this end, the second manipulation unit 174 can be implemented by various devices. For example, the second manipulation unit 174 can be a display (not shown) such as a liquid crystal display (LCD) and/or a key pad (not shown) having a plurality of keys (not shown). Here, the user can scroll information displayed on the LCD by manipulating a scroll key (not shown) of the keys provided on the key pad. When desired information is displayed on the LCD, the user can select the information by manipulating a selection key (not shown). In this case, the storage unit 170 can store the combined information, output via an output terminal IN6.

In order to perform operation 114, the second address generation unit 176 generates a combined address from the combined information, as changed by the second manipulation unit 174, and the other part of the combined information read out from the storage unit 170, in response to the installation request signal output from the first manipulation unit 172, and outputs the combined address to the address transmission unit 178. For example, when it is recognized, via the installation request signal output from the first manipulation unit 172, that the user requests the peripheral for installation of the driver, the address generation unit 176 generates the combined address.

When operation 100A of FIG. 4 does not include operation 110, the peripheral 150 of FIG. 6 does not include the first manipulation unit 172. In addition, when operation 100A does not include operation 112, the peripheral 150 of FIG. 6 does not include the second manipulation unit 174. In this way, when the peripheral 150 does not include the first and second manipulation units 172 and 174, in order to perform operation 114, the second address generation unit 176 generates the combined address from the combined information output from the storage unit 170.

In order to perform operation 116, the address transmission unit 178 transmits the combined address generated in the address generation unit 176 to the host 152.

On the other hand, in order to perform operation 102, the host 152 can access the combined address provided from the peripheral 150, retrieve the driver provided at the combined address, and install the retrieved driver. To this end, the host 152, as illustrated in FIG. 6, can include an address output unit 190, a driver output unit 192, and a driver installation unit 194. For example, the host 152 of FIG. 6 can perform operations 130 through 136 in operation 102A of FIG. 5.

In order to perform operation 130, of operation 102A of FIG. 5, the address input unit 190 can receive the combined address from the peripheral 150 and output the received combined address to the driver output unit 192.

In this case, in order to perform operations 132 and 134, the driver input unit 192 can output the combined address, output from the address input unit 190, to an output terminal OUT9, accesses the combined address connected to a network, input the driver provided from the accessed combined address via an input terminal IN7, and output the input driver to the driver installation unit 194. In order to perform operation 136, the driver installation unit 194, installs the driver input from the driver input unit 192.

For example, the driver input unit 192 and the driver installation unit 194, of FIG. 6, can perform the same operations as those of the driver output unit 54 and the driver installation unit 56, of FIG. 2.

On the other hand, in order to perform operations 30, 32, 34, and 36 of FIG. 5, the host 152 of FIG. 6 may further include a second message sending unit 70, an environment check unit 72, a second installation request examination unit 74, and a second basic address access unit 76.

In this case, the second message sending unit 70, the environment check unit 72, the second installation request examination unit 74, and the second basic address access unit 76, illustrated in FIG. 6, can perform the same operations as those of the second message sending unit 70, the environment check unit 72, the second installation request examination unit 74, and the second basic address access unit 76, illustrated in FIG. 2, and thus, detailed descriptions thereof will be omitted.

Only, after operation 32, when the user requests the host 152 for installation of the driver, a key manipulation unit (not shown), by which the second installation request examination unit 74 is implemented, is provided in the second installation request examination unit 74, illustrated FIG. 6. However, when the user requests the peripheral 150 for installation of the driver, the key manipulation unit corresponds to the first manipulation unit 172, unlike the embodiment illustrated in FIG. 6. In other words, the host 152 may not include the second installation request examination unit 74.

As described above, methods and the apparatuses for installing a device driver, according to the present invention, can automatically install the device driver provided at the combined address generated from the peripheral identification information obtained from the peripheral. Accordingly, since the device driver is automatically installed, a novice of peripherals can easily perform the installation. In addition, no storage medium for storing the device driver nor any reading device for reading the device driver from a storage medium are necessary, and the necessity of the user to keep a corresponding storage medium for a long time is removed, so that the satisfaction of customers who use the peripheral is improved. Furthermore, device driver manufacturers can save money for after-sale services, i.e., money for maintenance. In particular, the device driver provided at the combined address generated by reflecting manufacturer's and/or user's intention in the peripheral can be automatically retrieved and installed by the host. Accordingly, the manufacturer's and/or user's preferential settings can be reflected when the device driver is automatically installed.

Furthermore, embodiments of the present invention can be implemented based on computer readable code controlling a host and/or peripheral to implement the embodiments of the present invention. The computer readable medium may be a medium, e.g., a recording, an optical disc, a wave guide, and a signal, for example.

Although a few embodiments of the present invention have been shown and described, it would be appreciated by those skilled in the art that changes may be made in this embodiment without departing from the principles and spirit of the invention, the scope of which is defined in the claims and their equivalents.

## Claims

1. A method for installing a device driver for driving a peripheral, comprising:
determining whether peripheral identification information has been obtained from the peripheral;
combining a basic address of an Internet or intranet site, providing a driver for the peripheral, and the peripheral identification information and generating a combined address, when it is determined that the peripheral identification information has been obtained;
determining whether the combined address has been accessed;
retrieving the driver from the combined address when it has been determined that the combined address has been accessed; and
installing the retrieved driver.

2. The method of claim 1, wherein, when it is determined that the peripheral identification information has been obtained, in the combining of the basic address and the peripheral identification information and generating of the combined address, at least information of one of a predetermined operating system (OS), a default language of the OS, and an extension of the OS, are combined with the basic address and the peripheral identification information to generate the combined address.

3. The method of claim 1, further comprising sending a first message to a user representing that the peripheral identification information has not been obtained, when the peripheral identification information has not been obtained.

4. The method of claim 1, further comprising checking an operational state of the peripheral and informing a user of a result of the check when it is determined that the peripheral identification information has not been obtained.

5. The method of claim 4, further comprising determining whether a user again requests installation of the driver after being informed of a result of the operational state of the peripheral, and repeating the determining of whether the peripheral identification information has been obtained when it is determined that installation of the driver is again requested.

6. The method of claim 5, further comprising accessing the basic address and manually finding the driver, when it is determined that installation of the driver has not again been requested.

7. The method of claim 1, further comprising sending a second message to a user indicating that the combined address has not been accessed when it is determined that the combined address has not been accessed.

8. The method of claim 1, further comprising checking an access environment of the combined address and informing a user of a result of the check, when it is determined that the combined address has not been accessed.

9. The method of claim 8, further comprising determining whether installation of the driver has again been requested after the informing of the result of the checking of the access environment and repeating the determining of whether the combined address has been accessed when it is determined that installation of the driver has again been requested.

10. The method of claim 9, further comprising accessing the basic address and manually finding the driver, when it is determined that installation of the driver has not again been requested

11. The method of claim 1, wherein the driver is installed in the peripheral and/or the host.

12. An apparatus for installing a device driver for driving a peripheral, comprising:
an identification information input unit requesting and receiving peripheral identification information for the peripheral;
a first address generation unit combining the peripheral identification information and a predetermined basic address of an Internet or intranet site providing the device driver and outputting the combined address;
a driver input unit accessing the combined address and retrieving the device driver;
and a driver installation unit installing the retrieved device driver.

13. The apparatus of claim 12, further comprising a first message sending unit sending a first message indicating that the peripheral identification information has not been obtained, in response to a first control signal, wherein the identification information input unit examines whether the peripheral identification information has been output from the peripheral and outputs the examination result as the first control signal.

14. The apparatus of claim 12, further comprising a state check unit checking, and informing a user of a result, of an operational state of the peripheral in response to a first control signal, wherein the identification information input unit examines whether the peripheral identification information has been output from the peripheral and outputs the examination result as the first control signal.

15. The apparatus of claim 14, further comprising a first installation request examination unit examining whether installation of the driver has again been requested in response to a completion of the informing of the result of the operated state of the peripheral and outputting the examination result as a second control signal, wherein the identification information input unit again requests the peripheral identification information from the peripheral and receives the peripheral identification information in response to the second control signal.

16. The apparatus of claim 15, further comprising a first basic address access unit accessing the basic address in response to the second control signal, wherein the user manually finds the driver.

17. The apparatus of claim 12, further comprising a second message sending unit sending a second message indicating that the combined address has not been accessed in response to a third control signal, wherein the driver output unit examines whether the combined address is accessed and outputs the examination result as the third control signal.

18. The apparatus of claim 12, further comprising an environment check unit checking, and informing a user of a result, of an access environment of the combined address in response to the third control signal wherein the driver input unit examines whether the combined address has been accessed and outputs the examination result as the third control signal.

19. The apparatus of claim 18, further comprising a second installation request examination unit examining whether installation of the driver has again been requested in response to a completion of the informing of the result of the access environment result and outputting the examination result as a fourth control signal, wherein the driver input unit tries again to access the combined address in response to the fourth control signal.

20. The apparatus of claim 19, further comprising a second basic address access unit accessing the basic address in response to the fourth control signal, wherein a user manually finds the driver.

21. The apparatus of claim 12, wherein the driver is installed in the peripheral and/or host.

22. A method for installing a device driver for driving a peripheral comprising:
generating a combined address using combined information stored in the peripheral and providing the combined address to a host;
accessing the combined address;
retrieving the driver provided from the combined address; and
installing the retrieved driver, wherein the combined information includes a basic address of an Internet or intranet site providing the driver.

23. The method of claim 22, wherein the generating of the combined address and providing the combined address to the host comprises:
changing a portion of the combined information stored in the peripheral;
generating the combined address using the changed combined information and other portions of the stored combined information; and
transmitting the combined address to the host and performing the accessing of the combined address, retrieving of the driver, and installing of the retrieved driver, wherein the portion of the combined information changed by a user corresponds to at least one of a default language of an operating system (OS) and an installation type of the driver.

24. The method of claim 23, wherein the generating of the combined address and providing of the combined address to the host further comprises determining whether the user requests the installation of the driver in the peripheral rather than the host, and proceeding to the changing of the portions of the combined information when it is determined that the user requests the peripheral for installation of the driver.

25. The method of claim 22, wherein the driver is installed in the peripheral and/or host.

26. An apparatus for installing in a host a device driver for driving a peripheral, comprising:
a peripheral generating a combined address using stored combined information and provides the combined address to the host; and
a host accessing the combined address provided from the peripheral, retrieving the driver provided at the combined address, and installing the retrieved drivers,
wherein the combined information includes a basic address of an Internet or intranet site providing the driver.

27. The apparatus of claim 26, wherein the peripheral comprises:
a storage unit storing the combined information;
a first manipulation unit manipulated by a user who requests installation of the driver and generating an installation request signal;
a second address generation unit generating the combined address from the combined information read out from the storage unit in response to the installation request signal; and
an address transmission unit transmitting the combined address to the host.

28. The apparatus of claim 27, wherein the peripheral further comprises a second manipulation unit changing a portion of the combined information read out from the storage unit, as designated by a user, and outputting the changed combined information, with the portion of the combined information changed by the user corresponding to at least one of a default language of an operating system (OS) and an installation type of the driver, and wherein the second address generation unit generates the combined address using the changed combined information and the another portion of the combined information read out from the storage unit.

29. A medium comprising computer readable code controlling a host and/or peripheral for installing a device driver in the host and/or peripheral according to the method of claim 1.

30. A medium comprising computer readable code controlling a host and/or peripheral for installing a device driver in the host and/or peripheral according to the method of claim 22.

31. A method of installing a device driver, the method comprising sending an http or ftp request to a remote server, the request being in respect of a URL identifying a device driver resource, **characterised by** building the URL directly on the basis of the device for which the driver is required and, optionally, other characteristics of the apparatus requiring the driver.
